# EUROPEAN PATENT APPLICATION

(11) **EP 4 801 012 A1**
(43) Date of publication of application: **02.09.2026**
(21) Application number: 26161194.1
(22) Date of filing: 27.02.2026
(51) Int. Cl.: H04L 67/12, H04W 4/44

(54) **METHOD AND SYSTEM FOR DYNAMICALLY PLAYING ADVERTISEMENTS IN A VEHICLE**

(30) Priority: 28.02.2025 FR 2502050
(71) Applicant: Faurecia Clarion Electronics Europe, 75012 Paris (FR)
(72) Inventor: GAUTRON, Gabriel, 75012 PARIS (FR); SANTOS, Duarte, 1600-196 LISBOA (PT); ALVES, Michael, 1600-196 LISBOA (PT); PEREIRA, Miguel, 1600-196 LISBOA (PT); MONTEIRO, Joao, 1600-196 LISBOA (PT); BHATTACHARJEE, Debasmita, 1600-196 LISBOA (PT)
(74) Representative: Lavoix

(57) **Abstract**

The system for dynamically playing advertisements is adapted for a vehicle comprising at least two user interfaces (8A, 8B) including at least one display screen (8A) configured to display video data and at least one loudspeaker (8B), and further comprising at least one sensor-based system (6A-6F) providing vehicle data, the system comprising a processor (10) configured to:
- determine (20) a moving state of the vehicle based on vehicle data, and, if the vehicle is moving, determining an associated driving status of the vehicle,
- determine (22) a set of playing constraints adapted to the moving status and driving status of the vehicle, the playing constraints including a playing format and an advertisement category,
- select (24) at least one advertisement content compatible with the determined playing constraints, and
- play (26) the at least one content selected, on one of the user interfaces compatible with the determined playing format.

## Description

The present invention relates to a method and system for dynamically playing advertisements in a vehicle.

The invention is in the field of vehicles comprising infotainment services, which improve the user experience.

The recent vehicles, in particular automotive vehicles, are equipped with in-vehicle infotainment systems, which are configured to deliver multimedia information to the users of the vehicle, i.e. the driver and passengers of the vehicle. The multimedia information comprises images, videos and audio data, which may either be related to the vehicle equipment, vehicle driving parameters or to recreational contents.

In order to improve the user experience, it may be envisaged to play, on the vehicle user interfaces, advertisements for various products or services that may be of interest to the user. However, playing such contents, in particular in the form of videos displayed on a display screen, may distract the user's attention, and more particularly the driver's attention. This creates a safety breach which is unacceptable.

An aim of the invention is to provide a method and system for dynamically playing advertisements in a vehicle, while ensuring safe driving conditions.

To this end, the invention proposes a method for dynamically playing advertisements in a vehicle, the vehicle comprising at least two user interfaces including at least one display screen configured to display video data and at least one loudspeaker, and further comprising at least one sensor-based system providing vehicle data, the method being implemented by a processor and comprising the following steps:
- determine a moving state of the vehicle based on vehicle data, and, if the vehicle is moving, determining an associated driving status of the vehicle,
- determine a set of playing constraints adapted to the moving status and driving status of the vehicle, the playing constraints comprising a playing format and an advertisement category,
- select at least one advertisement content compatible with the determined playing constraints, and
- play the at least one content selected, on one of the user interfaces compatible with the determined playing format.

Advantageously, a driving status is determined, and the playing of advertisement contents is dependent on the moving status and driving status. The driving status may be, in particular, dependent on conditions related to the driving safety, and the playing of the advertisements is adapted in function of such driving safety conditions. Therefore, the general safety of the vehicle driving is preserved.

In embodiments of the invention, the method for dynamically playing advertisements in a vehicle comprises one or more of the following features, considered alone or according to all technically possible combinations.

The vehicle further comprising a geo-localizing system, in the selection step, a current position of the vehicle provided by the geo-localizing system is further used for the selection.

The determining of the driving status comprises using vehicle data to determine a driving status representative of driving conditions between at least safe driving conditions and unsafe driving conditions.

The vehicle data for determining a driving status comprises an average speed of the vehicle, a selected gear, vehicle dynamics.

The determining of the driving status further depends on data provided by a driver monitoring system and/or on data relating to external conditions.

If driving status indicates unsafe driving conditions, the playing constraints contain only safety-related advertisements, and the playing format is limited to non-interactable playing formats.

If the set of playing constraints indicate an advertisement category as safety-related category, the method comprises detecting safety issues by analyzing the vehicle data, the detecting of safety issues comprising : checking a level of energy supply of the vehicles, checking a presence of a default code or warning, checking if a consecutive time of driving is higher than a driving time limit.

According to another aspect, the invention concerns a system for dynamically playing advertisements in a vehicle the vehicle comprising at least two user interfaces including at least one display screen configured to display video data and at least one loudspeaker, and further comprising at least one sensor-based system providing vehicle data, the system comprising a processor configured to implement modules configured to :
- determine a moving state of the vehicle based on vehicle data, and, if the vehicle is moving, determining an associated driving status of the vehicle,
- determine a set of playing constraints adapted to the moving status and driving status of the vehicle, the playing constraints including a playing format and an advertisement category,
- select at least one advertisement content compatible with the determined playing constraints, and
- play the at least one content selected, on one of the user interfaces compatible with the determined playing format.

According to a particular feature, the vehicle further comprising a geo-localizing system, the selecting module is configured to further select at least one advertisement content depending on a current position of the vehicle provided by the geo-localizing system

According to another aspect, the invention concerns a computer program comprising code instructions which, when they are executed by a programmable device, implement a method for dynamically playing advertisements in a vehicle as briefly described above.

According to another aspect, the invention relates to a non-volatile recording medium for recording a computer program comprising code instructions which, when they are executed by a programmable device, implement a method for dynamically playing advertisements in a vehicle as briefly described above.

Further characteristics and advantages of the present invention will become apparent from the following description, provided merely by way of non-limiting example, with reference to the enclosed drawings, in which:
[Fig. 1] figure 1 is a diagram representing a vehicle comprising a system for dynamically playing advertisements according to an embodiment;
[Fig. 2] figure 2 is a block-diagram of the main steps of a method for dynamically playing advertisements according to an embodiment.

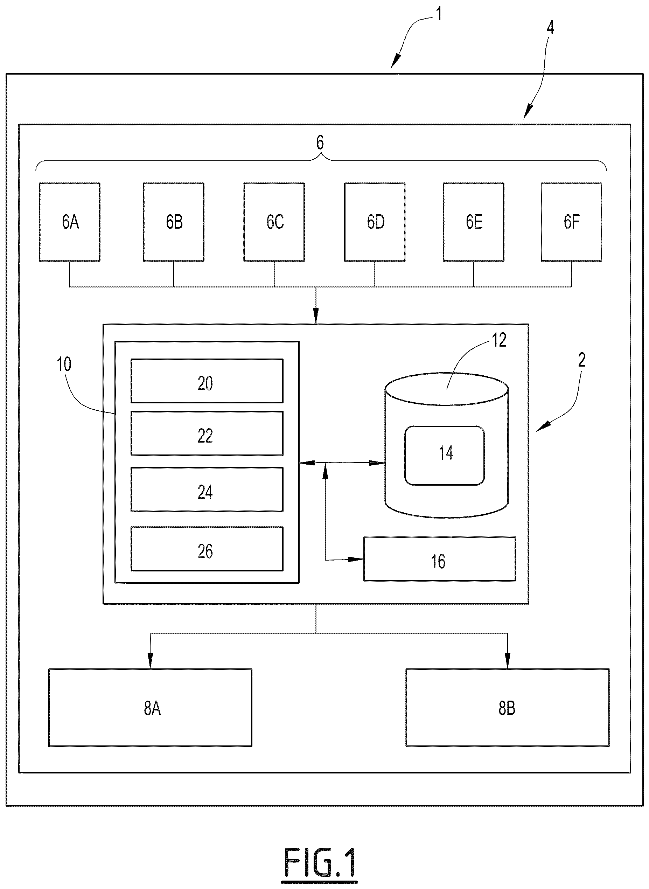

Figure 1 represents schematically a vehicle 1, such as an automotive vehicle, comprising a system 2 for dynamically playing advertisements.

The vehicle comprises various sensor-based systems 6, which provide vehicle-related data, the data being either related to the vehicle operation, to the vehicle users, or to external conditions of the vehicle.

The sensor-based systems 6 include : sensors 6A related to the driving conditions (e.g. speed, acceleration, selected gear, brakes, fuel or battery status, default conditions); internal or external cameras 6B; a driver monitoring system, DMS 6C; a geo-localizing system 6D, such as a GPS system; weather conditions related sensors 6E. The list of sensor-based systems is not limited, and other types of sensor-based systems 6F may be included.

The sensor-based systems 6 are connected to a vehicle control system 4 and provide vehicle-related data to the vehicle control system.

The system for dynamically playing advertisements 2 is either included in the vehicle control system 4 or connected to the vehicle control system 4.

The system 2 for dynamically playing advertisements at least two user interfaces 8A, 8B, respectively a display screen 8A adapted for displaying multimedia content, and at least one loudspeaker 8B adapted for providing audio contents.

Typically, the display screen(s) 8A may be integrated in a trim element of the vehicle 1, and may be part of an IVI (for "in-vehicle infotainement" system). The loudspeakers 8B are typically connected to the display screen 8B and may be used for playing audio contents synchronously with the video contents displayed on the display screen(s) 8A. Furthermore, the loudspeakers 8B can be used independently from the display screen(s) 8A, for playing audio contents.

The system 2 for dynamically playing advertisements comprises a processing unit (e.g. a processor) 10, connected to an electronic memory 12 storing various advertisements 14, and to a communication interface 16, forming a programmable device. The processing unit 10, the communication interface 16 and the electronic memory 12 are configured to communicate via a communication bus. The communication interface 16 is adapted to communicate via a wired or wireless communication technology with other information systems.

According to an alternative embodiment, the communication interface 16 is adapted to communicate via a wireless communication technology, to transmit and receive data from at least one distant device, the distant device being a server of advertisement contents.

The processor 10 is configured to implement a first determining module 20, configured to determine a moving state of the vehicle based on vehicle data provided by the vehicle control system, and, if the vehicle is moving, to determine an associated driving status of the vehicle.

Further, the processor 10 is configured to implement a second determining module 22 configured to determine a set of playing constraints adapted to the moving status and driving status of the vehicle, the playing constraints including a playing format and advertisement category; a selecting module 24 configured to select at least one advertisement content compatible with the determined playing constraints and a playing module 26, configured to play the at least one content selected, on one of the user interfaces compatible with the determined playing format.

According to an embodiment, modules 20, 22, 24, 26 are implemented as software, in the form of a computer program comprising instructions, which, when they are executed by a programmable device, implement a method for dynamically playing advertisements in a vehicle. The computer program may be stored on a non-volatile information recording medium, readable by a computer, such as an optical disk, a magneto-optical disk, any type of non-volatile memory (e.g. EPROM, EEPROM, FLASH, NVRAM), a magnetic card or and optical card.

Alternatively, the modules 20, 22, 24, 26 are stored on a non-volatile information recording medium, such as an optical disk, a magneto-optical disk, any type of non-volatile memory (e.g. EPROM, EEPROM, FLASH, NVRAM), a magnetic card or and optical card.

According to another alternative, each of the modules 20, 22, 24, 26 is implemented by a FPGA (Field Programmable Gate Array), or a dedicated integrated circuit such as an ASIC (Applications Specific Integrated Circuit).

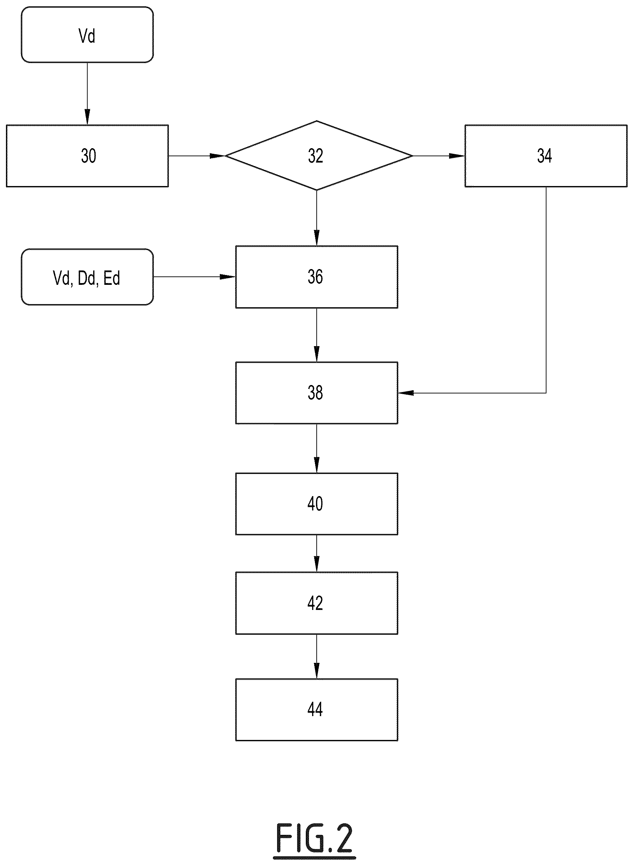

The main steps of a method for dynamically playing advertisements in a vehicle according to an embodiment will be described below, with reference to figure 2.

The method comprises a step 30 of first determining a moving state of the vehicle based on vehicle data Vd, the vehicle data being for example data provided by sensor-based system 6A in particular data relative to the average speed of the vehicle. Other vehicle data, for example vehicle data related to the vehicle brakes, may also be used.

The moving state of the vehicle may therefore be stopped or moving, and further a distinction between a first moving state, corresponding to low speed, such as per example less than 5 km/h and a second moving state corresponding to a higher speed may be made. This distinction may be achieved for example by comparing the average vehicle speed during a predefined period of time, such as one or two minutes, to a speed threshold. If the average vehicle speed is lower than the speed threshold, the moving state is the first moving state; if the average vehicle speed is higher than the speed threshold, the moving state is the second moving state. Therefore, the vehicle may be in one of the three moving states: stopped, first moving state, second moving state.

Next, it is checked at checking step 32 whether the moving state of the vehicle is stopped. If the vehicle is stopped, as for example with an average speed of zero and with parking brake on, then any type of advertisement may be played. Indeed, if the vehicle is stopped and parked, it is considered that there is no risk to distract the driver.

Step 32 is then followed by a step 34 indicating that playing advertisements with no restriction on category, format or duration is allowed, for example as videos displayed on the display screen 8A.

If the vehicle is moving, the step 32 is followed by second determining 36 a driving status of the vehicle. The driving status is typically representative of a level of driving safety.

The driving status is determined in function of the vehicle data Vd (i.e. data related to vehicle operation) such as instant speed, average speed, selected gear, vehicle dynamics. If a distinction between a first moving state and a second moving state is applied, then the moving state is also taken into account to determine the driving status.

The data related to the vehicle operation is analyzed to determine if the driving is smooth, therefore reflecting safe driving conditions, clear/safe roads or if the driving is hectic, with significant changes of speed and/or acceleration, indicating unsafe driving conditions.

Advantageously, if the vehicle is equipped with a DMS, data relating to the driver state is also provided, indicating driver drowsiness or fatigue.

Optionally, data relating to external conditions Ed is also provided, such as weather conditions and/or traffic conditions. For example, weather conditions including freezing risks, fog, heavy rain typically indicate unsafe driving conditions.

The data Vd, Dd, Ed provided as an input is processed, for example by using predetermined rules and thresholds, to determine a driving status.

For example the driving status may indicate either "safe driving conditions" or "unsafe driving conditions".

According to a variant, the driving status may be provided as a number representative of the safety of the driving conditions, ranking from totally safe to unsafe/high risk, on a given scale, for example from 1 to 5.

According to an embodiment, if the determined driving status is "unsafe driving conditions", any advertisement playing is forbidden, so as to avoid distracting the driver.

According to another possible embodiment, if the driving status indicates an unsafe driving condition, advertisements relating to safety issues may still be allowed, but only in a non-distracting format, such as audio format, as explained hereafter in further detail.

The determining 36 of the driving status is then followed by determining 38 a set of playing constrains adapted to the determined driving status of the vehicle.

The playing constraints include :
- category or categories of advertisements allowed,
- playing format, i.e. audio format, video format, and associated playing duration. The playing constraints may optionally further include :
- a type of interaction, such as one-click, voice commands;
- a dismiss mechanism and
- a maximum frequency of playing an advertisements.

At least two categories of advertisements are distinguished, namely "safety-related advertisements" and "other advertisements".

Among the "other advertisements", sub-categories relating to food and drinks, hotels or tourist attractions may be considered.

The safety-related advertisements are advertisements related to features that can enhance the driving safety, depending on the vehicle data related to fuel / battery status, consecutive time of driving, any warning or default code raised. The advertisements for fuel stations, battery recharging stations, garages, rest areas fall in the category of safety related advertisements.

In particular, if the driving status indicates unsafe driving conditions, only safety related advertisements, in non-interactable format, such as for example audio format, with a duration limited to a duration limit or a non-interactable banner format with a small amount of text, and with limited interaction (e.g. one-click or voice commands) are allowed.

If the driving status indicates safe driving, any category of advertisements may be allowed, but the playing may be limited to a chosen non-interactable format, preferably, with limited duration, when the vehicle is moving, so as to avoid disturbing the driver.

The duration limit may differ depending on the driving status.

The method further comprises detection 40 the presence of safety issues by analyzing the vehicle data Vd.

In particular, the level of vehicle energy supply is checked. For fuel powered vehicles, it is checked whether the vehicle fuel reserve is lower than a fuel limit, for electric vehicles, it is checked whether the battery remaining power storage is lower than a given percentage.

Furthermore, a presence of default or warning is detected, by checking whether any vehicle or default code present.

Also, it is checked if the consecutive time of driving is higher than a driving time limit.

Furthermore, weather conditions raising specific safety issues (heavy rain, strong winds, ice etc) may also be checked, based on external data.

If any one or several of these verifications give a positive outcome, a safety issue or specific weather conditions is detected, safety related advertisements may be played, according to the determined playing constraints.

Further, the method comprises a step of selecting 42 one or several advertisements contents compatible with the playing constraints.

Preferably, a current position of the vehicle provided by the geo-localizing system on board is used in the selecting step, so as to achieve effective targeting.

For example, if one of the safety issues is present, the selection of safety related advertisements comprises:
- if the vehicle fuel reserve is lower than a fuel limit, play advertisements for fuel stations close by the current position of the vehicle;
- for an electric vehicle, if the battery remaining power storage is lower than a given percentage, play advertisements for battery charging stations close by the current position of the vehicle;
- if a mechanical or electronic issue is detected by a default code, play advertisements for garages close-by the current position of the vehicle;
- if the consecutive time of driving is higher than a driving time limit, play advertisements for rest areas close by the current position of the vehicle.

For the other categories of advertisements which are not safety related, other data may be taken into account for selection 42, such as time of the day, number of passengers in the vehicle.

The advertisements contents are for example provided by an advertisement service provider.

According to an embodiment, the service provider proposes a same advertisement content in various playing formats, such as audio format or video format, various playing durations.

The method further comprises a step 44 of playing the content selected on a corresponding user interface, compatible with the playing format and duration limit indicated by the playing constraints.

Advantageously, the method proposed reduces driver distraction, therefore enhances driving safety. By adapting to the vehicle data, the proposed method optimizes the user perception.

## Claims

1. A method for dynamically playing advertisements in a vehicle, the vehicle comprising at least two user interfaces including at least one display screen configured to display video data and at least one loudspeaker, and further comprising at least one sensor-based system providing vehicle data, the method being implemented by a processor and comprising the following steps:
- determine (30) a moving state of the vehicle based on vehicle data, and, if the vehicle is moving, determining an associated driving status of the vehicle,
- determine a set of playing constraints adapted to the moving status and driving status of the vehicle (34, 36, 38), the playing constraints comprising a playing format and an advertisement category,
- select (42) at least one advertisement content compatible with the determined playing constraints, and
- play (44) the at least one content selected, on one of the user interfaces compatible with the determined playing format.

2. The method according to claim 1, wherein the vehicle (1) further comprises a geo-localizing system (6D), wherein in the selection step, a current position of the vehicle provided by the geo-localizing system is further used for the selection.

3. The method according to any of claims 1 or 2, wherein the determining (36) of the driving status comprises using vehicle data to determine a driving status representative of driving conditions between at least safe driving conditions and unsafe driving conditions.

4. The method according to claim 3, wherein the vehicle data for determining a driving status comprises an average speed of the vehicle, a selected gear, vehicle dynamics.

5. The method according to claims 3 or 4, wherein the determining (36) of the driving status further depends on data provided by a driver monitoring system and/or on data relating to external conditions.

6. The method according to any of claims 3 to 5, wherein if driving status indicates unsafe driving conditions, the playing constraints contain only safety-related advertisements, and the playing format is limited to non-interactable playing formats.

7. The method according to any of claims 1 to 6, wherein if the set of playing constraints indicate an advertisement category as safety-related category, the method comprises detecting (40) safety issues by analyzing the vehicle data, the detecting of safety issues comprising : checking a level of energy supply of the vehicles, checking a presence of a default code or warning, checking if a consecutive time of driving is higher than a driving time limit.

8. A computer program comprising code instructions which, when they are executed by a programmable device, implement a method for dynamically playing advertisements in a vehicle according to any of claims 1 to 7.

9. A system for dynamically playing advertisements in a vehicle, the vehicle comprising at least two user interfaces (8A, 8B) including at least one display screen (8A) configured to display video data and at least one loudspeaker (8B), and further comprising at least one sensor-based system (6A-6F) providing vehicle data, the system comprising a processor (10) configured to implement:
- a determining module (20) configured to determine a moving state of the vehicle based on vehicle data, and, if the vehicle is moving, determining an associated driving status of the vehicle,
- a determining module (22) configured to determine a set of playing constraints adapted to the moving status and driving status of the vehicle, the playing constraints including a playing format and an advertisement category,
- a selecting module (24) configured to select at least one advertisement content compatible with the determined playing constraints, and
- a playing module (26) configured to play the at least one content selected, on one of the user interfaces compatible with the determined playing format.

10. The system of claim 9, wherein the vehicle (1) further comprises a geo-localizing (6D) system, and wherein the selecting module (24) is configured to further select at least one advertisement content depending on a current position of the vehicle provided by the geo-localizing system (6D).
